**Europäisches Patentamt**

**European Patent Office**

**Office européen des brevets**

(19)

(11) **EP 1 367 763 A1**

(12) **EUROPÄISCHE PATENTANMELDUNG**

(43) Veröffentlichungstag:
**03.12.2003 Patentblatt 2003/49**

(51) Int Cl.$^7$: **H04L 7/04**, H04J 3/06,
H04B 10/158

(21) Anmeldenummer: **02360160.2**

(22) Anmeldetag: **31.05.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **ALCATEL**
**75008 Paris (FR)**

(72) Erfinder:
• **Lautenschläger, Wolfram**
**74343 Sachsenheim (DE)**

• **Bunse, Stephan**
**70565 Stuttgart (DE)**
• **Die andere Erfinder haben auf ihre Nennung verzichtet**

(74) Vertreter: **KOHLER SCHMID + PARTNER**
**Patentanwälte**
**Ruppmannstrasse 27**
**70565 Stuttgart (DE)**

(54) **Verfahren der asynchronen Datenpaketübertragung sowie zugehörige Sender und Empfänger**

(57) Ein Verfahren zum asynchronen Übertragen von Datenpaketen in Telekommunikationsnetzen mit einer Bitrate B, ist gekennzeichnet durch folgende Schritte:

(a) Bearbeiten der zu übertragenden Daten in der Weise, dass die Wahrscheinlichkeit des Auftreffens eines 0- oder 1-Zustandes im Datenstrom an jeder Bit-Position ungefähr gleich groß und unabhängig von anderen Bitpositionen ist (=Scrambling);
(b) Abwarten einer Schutzzeit $t_{gb}$, Senden einer Synchronisationssequenz während einer Zeit $t_{sy}$, Senden eines Synchronisationswortes während der Zeit $t_{co}$, und Senden der Datennutzlast;
(c) Erkennen einer Synchronisationssequenz und Synchronisierung darauf in einem Empfänger;
(d) Erkennen des Anfangs des Datenpakets durch Erkennen des Synchronisationswortes im Empfänger;
(e) Empfangen der Datennutzlast im Empfänger.

Dieses ermöglicht an einem Signalempfänger ein leichtes, direktes Erkennen der Datennutzlast eines Datenpaktets, wobei der Signalempfänger weitestgehend auf Basis der bekannten Hardwaretechnik von Empfängern von kontinuierlichen Punkt-zu-Punkt-Verbindungen ausgestaltet werden kann.

Fig. 2

**EP 1 367 763 A1**

**Beschreibung**

Stand der Technik

Die Erfindung betrifft ein Verfahren zum asynchronen Übertragen von Datenpaketen in Telekommunikationsnetzen mit einer Bitrate B sowie Sender und Empfänger zur Durchführung dieses Verfahrens.

Die Erfindung betrifft weiterhin ein Verfahren zur synchronen Übertragung von Datenpaketen in Telekommunikationsnetzwerken, wobei die zu übertragende Datennutzlast in eine Rahmenstruktur gemäß dem Standard G.709 eingebunden ist.

Ein solches Verfahren zum asynchronen Übertragen von Datenpaketen sowie eine entsprechende Empfangseinheit sind aus einer Druckschrift von H. Nishizawa et al., 26th European Conference on Optical Communication, ECOC 2000, Sept. 3-7, 2000 Munich, Germany, Paper 10.4.8, vol. 4, Seiten 75ff bekannt geworden.

Datenübertragung mit hohem Informationsfluß, d.h. einer hohen Anzahl von pro Zeiteinheit übertragenen binären Informationseinheiten (Bits), insbesondere mit 9,95328 GBit/s ("10 GBit/s") und mehr, erfolgt in optischen Informationsnetzen vornehmlich durch sogenannte **Punkt-zu-Punkt-Verbindungen**. Dabei werden im einfachsten Fall Signale von einer Sendeeinheit eines ersten Netzpunktes über einen Lichtwellenleiter kontinuierlich und ausschließlich zu einem Empfänger in einem zweiten Netzpunkt geleitet. Auch wenn zeitweise keine Daten zwischen diesen beiden Netzpunkten zu übertragen werden brauchen, wird ein Signalfluss aufrechterhalten. Der Empfänger kann dadurch seine Auslesephase und Auslesebitposition (d.h. die Synchronisation mit der Sendeeinheit) und auch den Grenzpegel (d.h. die Schwellintensität, unterhalb derer das Signal als "0" und oberhalb derer das Signal als "1 "erkannt wird) beibehalten. Diese Art der Datenübertragung wird daher auch als "synchron" bezeichnet.

Am Empfänger werden die Daten entpackt und ausgelesen, um das Ziel des Datenpakets zu bestimmen. Anschließend erfolgt ein erneutes Einpacken der Informationen in ein Datenpaket, das dann von einer Sendeeinheit des zweiten Netzpunktes an einen dritten Netzwerkpunkt weitergegeben wird, wobei dieser dritte Netzwerkpunkt dem Ziel des Datenpakets näher ist als der zweite Netzwerkpunkt.

Eine Alternative dazu stellt die Datenübertragung im sogenannten **Burst-Modus** dar; diese wird auch als "asynchrone" Datenübertragung bezeichnet.

Sie ist insbesondere für den IP Datenverkehr (Internet) geeignet, bei dem kurze Datenpakete zwischen ständig wechselnden Sender-Empfänger-Paaren ausgetauscht werden sollen. An einem Netzpunkt (zwischen Sender und Empfänger gelegen) treffen Leitungen von verschiedenen anderen Netzpunkten zusammen. Ein einlaufendes Datenpaket auf einer der Leitungen wird über einen optischen Schalter direkt physikalisch (d.h. ohne Auslesen) auf eine der anderen Leitungen des Netzpunkts weitergeleitet. Diese Leitung wird entsprechend dem Ziel des Datenpakets ausgewählt, wobei diese Zielinformation einem kurzen Header-Datenpaket entnommen wird. Der Header wird als einziges ausgelesen; seine Übertragung kann zeitversetzt oder auf einem separaten Kanal erfolgen.

An einem solchen Netzpunkt wechseln sich also Zeiten von Datenpaket-Eingang und dessen Weiterleitung mit Zeiten von Finsternis (d.h. kein Eingang von Signalen) ab. In den Zeiten von Finsternis erfolgt gegebenenfalls eine Umschaltung der Ausgangsleitung für das als nächstes weiterzuleitende Datenpaket.

Der Empfänger eines Burst-Mode-Netzes hat dabei zwei Schwierigkeiten zu bewältigen: Erstens ist nur die Frequenz (Bitrate), nicht aber die Phase eines ankommenden Signals bestimmt. Der Empfänger muss also auf jedes einlaufende Signalpaket synchronisiert werden. Zweitens sind die Amplituden der einlaufenden Signalpakete von Sender zu Sender unterschiedlich, beispielsweise aufgrund von Dämpfungseffekten in den verschieden langen am Netzpunkt einlaufenden Signalleitungen. Deshalb muss auch der Grenzpegel für jedes einlaufende Datenpaket neu geeicht werden. Je schneller ein Umschalten zwischen verschiedenen Sendern dabei erfolgen kann, desto höher ist der mögliche Datendurchsatz.

Infolgedessen sind zum Empfang von Burst-Mode Signalen spezielle Empfänger notwendig. Ein solcher Burst-Mode Empfänger ist von Nishizawa et al., aaO, beschrieben. An dem Empfänger liegt dabei sowohl ein Manchestercodiertes optisches Datenpaket als auch ein Extraktionssignal an. Das optische Datenpaket wird mit einem EDFA-Vorverstärker verstärkt und einem differentiellen Photodetektor zugeführt. Dessen Signal wird linear verstärkt, Hochpass-gefiltert und einem elektrischen Begrenzer-Verstärker (limiting amplifier) zugeführt. Datenpaket und Extraktionssignal werden schließlich mit einem digitalen Ringoszillator und einem Entscheider-Kreis ausgewertet, so dass am Ausgang des Empfängers das ursprüngleiche Datenpaket als elektrisches Non-Return to Zero (NRZ)-Signal vorliegt. Die verwendeten optischen Datenpakete bestehen aus kurzen Vorspann-bits zur Synchronisation und der Datennutzlast. Das Extraktionssignal, dass dem Empfänger parallel zum optischen Signal zugeführt wird, zeigt dabei die Vorspann-Periode an.

Ein solcher Burst-Mode Empfänger ist dabei verglichen mit Signalempfängern zur kontinuierlichen (synchronen) Signalübertragung teuer und kompliziert aufgebaut. Problematisch ist auch das Erkennen des Beginns der Datennutzlast, wozu ein zusätzliches Steuersignal, das Extraktionssignal, benötigt wird.

Aufgabe der Erfindung

Aufgabe der vorliegenden Erfindung ist es demgegenüber, das Burst-Mode-Verfahren so auszugestalten, dass an einem Signalempfänger ein leichtes, direktes Erkennen der Datennutzlast eines Datenpaktets ermöglicht wird und außerdem der Signalempfänger weitestgehend auf Basis der bekannten Hardwaretechnik von Empfängern von kontinuierlichen Punkt-zu-Punkt-Verbindungen ausgestaltet werden kann.

Vorteile der Erfindung

Dies wird verfahrenstechnisch dadurch erreicht, dass das asynchrone Übertragen von Datenpaketen in Telekommunikationsnetzen mit einer Bitrate B gekennzeichnet ist durch folgende Schritte:

(a) Bearbeiten der zu übertragenden Daten in der Weise, dass die Wahrscheinlichkeit des Auftreffens eines 0-oder 1-Zustandes im Datenstrom an jeder Bit-Position ungefähr gleich groß und unabhängig von anderen Bitpositionen ist (=Scrambling);
(b) Abwarten einer Schutzzeit $t_{gb}$, Senden einer Synchronisationssequenz während einer Zeit $t_{gy}$, Senden eines Synchronisationswortes während der Zeit $t_{co}$, und Senden der Datennutzlast;
(c) Erkennen einer Synchronisationssequenz und Synchronisierung darauf in einem Empfänger;
(d) Erkennen des Anfangs des Datenpakets durch Erkennen des Synchronisationswortes im Empfänger;
(e) Empfangen der Datennutzlast im Empfänger.

Für den Empfang von erfindungsgemäß gestalteten Datenpaketen kann ein Empfänger, welcher ursprünglich für einen kontinuierlichen Signalempfang ausgelegt ist, erfindungsgemäß umgestaltet werden, indem man die untere Grenzfrequenz $f_u$ des Empfängers anhebt. Dadurch wird ein Gedächtnis-Effekt des Empfängers über Paketgrenzen hinweg vermieden. Allerdings werden dadurch Signalfolgen mit hohem Gleichspannungsanteil (also Folgen mit vielen Nullen oder vielen Einsen in direkter Folge) nur gestört empfangen. Aus diesem Grund wird erfindungsgemäß ein Scrambling-Verfahren der Datenverschlüsselung angewandt, um solche Folgen zu vermeiden.
Aus diesem Grund wird erfindungsgemäß mindestens ein Scrambling-Verfahren angewendet, das unabhängig von der Natur der Nutzdaten die Gleichverteilung und Unabhängigkeit der Bits gewährleistet (Beispiel Telefax - fast alle Bits sind "weiß" nur wenige sind "schwarz"; nur durch Scrambling wird eine gleichverteilte 0/1 Folge daraus). Besser als Scrambling ist Kanalkodierung. Dabei werden zusätzliche Bits in den Datenstrom eingefügt, so dass unerwünschte Bitfolgen generell ausgeschlossen werden können (Scrambling kann solche unerwünschten Bitfolgen nicht ausschließen, macht sie nur unwahrscheinlich entsprechend ihrer Länge). Manchester-Kodierung ist ein extremes Beispiel für Kanalkodierung, bei dem für jedes zu übertragende Bit ein zusätzliches Bit übertragen wird. Dadurch wird ein Bitwechsel im Signal spätestens im dritten aufeinanderfolgenden Signalbit sichergestellt. Allerdings wird auch der Datendurchsatz halbiert.
Eine alternative Kodierung sieht zum Beispiel vor, dass eine Folge von 8 Informations-Bits (oder eine vergleichbare Größenordnung) in ein 10-Bit-Signal überführt wird, wobei Bit 9 und Bit 10 verschieden, also etwa 0 und 1 sind. Dadurch wird ein Bitwechsel im Signal spätestens nach 10 Bits sichergestellt. Diese Kodierung reduziert den Datendurchsatz lediglich um 20%.
Durch das Scrambling bzw. das Kodieren wird der Gleichspannungsanteil des Signals so weit gesenkt, dass durch das Abschneiden der niederfrequenten Signalanteile unterhalb der unteren Grenzfrequenz kein Informationsverlust auftritt, d.h. dass im kodierten Signal keine niederfrequenten Anteile auftreten.
Um bei einer unteren Grenzfrequenz $f_u$ von B/300 die gleiche Bit-Fehlerrate, (typisch $10^{-12}$) wie bei nicht angehobener unterer Grenzfrequenz zu erreichen, benötigt man ein um 3 dB besseres Signal-Rausch-Verhältnis. Dies kann durch ein Anheben der Sendeleistung erreicht werden. Höhere untere Grenzfrequenzen führen zu einem starken, vom Signal-Rausch-Verhältnis unabhängigen Anstieg der Bitfehlerrate und damit zu einer erhöhten Paketverlustwahrscheinlichkeit.
Während der Synchronisationssequenz $t_{sy}$ hat der Empfänger die Möglichkeit, sich auf das Datenpaket einzuschwingen. Dies wird insbesondere dazu genutzt, die Phase des ankommenden Signals zu bestimmen und den Empfänger darauf zu synchronisieren, als auch um die Intensität des ankommenden Signals zu bestimmen, um den Grenzpegel festzulegen. Eine einfache Synchronisationssequenz besteht in einer 101010...-Folge.
Die Entscheidungsschwelle (der Grenzpegel) stellt sich während der Synchronisationssequenz auf den Signalmittelwert ein. Die ersten Bits werden unter Umständen gar nicht erkannt und gehen verloren, da während diesen eine sichere Erkennung von 0 und 1 noch nicht möglich ist. Die Mindest-Einschwingzeit $t_{sy}$ ergibt sich aus der Einschwingzeit für den Hochpass des Empfängers über $f_u$ gemäß $t_{sy} \geq 1/(2*\pi*f_u)$, wobei mit $f_u$, = B/300 gilt $t_{sy} > 53/B$. In diesem Fall muss die Synchronisationssequenz also wenigstens 53 Bit lang sein; in der Praxis werden 100 Bit gewählt, was bei B=10 Gbit/s einem $t_{sy}$ von 10 ns entspricht.

Durch die Einbindung eines Synchronisationswortes wird der Anfang der Nutzdatenlast definiert. Dies ist notwendig, da eine unbestimmte Zahl von Bits am Paketanfang während der Synchronisation verloren geht. Das Synchronisationswort sollte eine schmale Autokorrelationsfunktion und möglichst großem Codeabstand sowohl zur Synchronisationssequenz (z.B. 101010...) als auch zur Signalpause (0000...) besitzen. Ein 16 Bit Synchronisationswort reicht im Allgemeinen aus. Die Einbindung des Synchronisationsworts macht ein Steuersignal (Extrusionssignal) zur Identifizierung des Anfangs der Datennutzlast also überflüssig, und es brauchen keine zeitkritischen Schaltvorgänge stattzufinden.

Die Schutzzeit $t_{gb}$ ist erforderlich, um dem Empfänger nach Empfang eines Pakets mit maximaler Sendeleistung Zeit zum Ausschwingen zu geben, so dass anschließend ein Paket mit der minimal zulässigen Sendeleistung noch sicher erkannt werden kann. Bei einer unteren Grenzfrequenz $f_u$ = B/300 und einer Leistungsschwankung von 7 dB ergibt sich eine Schutzzeit $t_{gb}$ entsprechend 150 Bit, bei B=10 Gbit/s also ca. 15 ns.

Der Empfänger gibt dabei eine minimale Schutzzeit vor, die von der Synchronität des übergeordneten Systems, bestehend aus mehreren Sendern und optischen Schaltern, eingehalten werden muss.

Dieses übergeordnete System ist eine vermaschte Struktur von Netzpunkten, die im Falle eines optischen Burst-Mode-Netzwerks aus einer Vielzahl von Lichtwellenleitern, gegebenenfalls mit Verstärkerelementen, und optischen Schaltern bestehen. Mindestens eine Leitung führt von einem der optischen Schalter zum Empfänger. Es sind unter anderem Stern-, Ring- und Baumförmige Strukturen denkbar.

Die Größe des Nutzdatenanteils am Datenpaket ist bei dem erfindungsgemäßen Verfahren bzw. durch den erfindungsgemäßen Empfänger grundsätzlich nicht eingeschränkt. Es sind sowohl fixe Paketlängen als auch variable Paketlängen denkbar. Die Größe des Nutzdatenanteils beeinflusst aber die Kanalauslastung, d.h. den Anteil des Nutzdatentransports am gesamten Signalverkehr. Je länger der Datennutzlastabschnitt des Datenpakets, desto besser (höher) ist die Kanalauslastung. Bei einem 10 GBit/s Datennetz mit einer durchschnittlichen Pause von 50 ns zwischen zwei Paketen und einer Synchronisationssequenz von 12 ns sowie einer Nutzdatenlänge von 1 μs (10000 Bit) ergibt sich eine Kanalauslastung von ca. 95%.

Bei einer besonders bevorzugten Variante des erfindungsgemäßen Verfahrens erfolgt die Übertragung der Datenpakete durch eine hochbitratige optische Datenübertragung mit B ≥ 9,95328 Gigabit/Sekunde. Der Standard von 9,95328 Gbit/s wird auch kurz als 10 Gbit/s bezeichnet. Bei solchen hohen Bitraten kommen die Vorteile der Erfindung besonders gut zur Geltung. Optische Systeme sind in der Lage, solch hohe Bitraten zu erzielen.

Besonders bevorzugt wird weiterhin eine Variante des erfindungsgemäßen Verfahrens, bei dem die Übertragung der Datenpakete im Burst-Modus erfolgt. Dies ist die übliche Methode der asynchronen Signalübertragung, bei der die Erfindung besonders gut zur Geltung kommt.

Eine erfindungsgemäße Verfahrensvariante sieht vor, dass zur Bearbeitung der Daten in Schritt (a) ein Kodierungsverfahren verwendet wird, bei dem das Leistungsspektrum der kodierten Daten keine Intensität bei Frequenzen unterhalb von $0,01^*$B aufweist, insbesondere keine Intensität unterhalb von $0,003^*$B. Im Falle von B ≈ 10 Gbit/s entsprechen diese Frequenzen 100MHz und 30 MHz. Dadurch wird ein Informationsverlust bei der Datenübertragung im Empfänger minimiert, denn das Datensignal wird am erfindungsgemäßen Empfänger über einen Hochpass angelegt.

Das erfindungsgemäße Verfahren sieht in einer bevorzugten Variante vor, dass die Datenpakete von mehreren Sendern auf ein Netzelement gesendet werden, welches die Datenpakete im Zeit-Multiplex auf eine gemeinsame Ausgangsleitung zu einem ausgewählten Empfänger leitet. An dem Netzelement können dabei auch weitere Netzelemente als Sender angeschlossen sein. Bei einer Verknüpfung des Netzelements mit mehreren Sendern kommt der Burst-Mode-Betrieb erst voll zur Geltung. Dadurch wird ein guter Datendurchsatz erreicht.

In Ausgestaltung der beiden vorherigen Verfahrensvarianten des erfindungsgemäßen Verfahrens zum asynchronen Übertragen von Daten bewirkt das Netzelement eine zeitliche Trennung eines Endes eines ersten Datenpakets von einem Anfang eines zweiten weitergeleiteten Datenpakets von mindestens $t_{gb}$. Dadurch wird eine Kollision von Datenpaketen am Empfänger verhindert, und der Empfänger ist ausreichend relaxiert (ausgeschwungen), bevor ein neues Datenpaket an ihm anliegt.

Eine ganz besonders bevorzugte Variante des erfindungsgemäßen Verfahrens sieht vor, dass die Schutzzeit $t_{gb} \geq \frac{100}{B}$ gewählt wird. Diese Schutzzeit ist ausreichend, um den Empfänger nach dem Empfang eines Datenpakets mit hoher Signalintensität wieder in den Ausgangszustand zu versetzen, d.h. auszuschwingen zu lassen, so dass im Anschluss an $t_{gb}$ auch ein Signal mit niedriger Intensität zuverlässig erkannt wird. Die erfindungsgemäße Größe von $t_{gb}$ verbessert also die Zuverlässigkeit der Datenübertragung.

Bei einer bevorzugten Verfahrensvariante beträgt die untere Grenzfrequenz des Empfängereingangs zwischen $0,0005^*$B und $0,005^*$B, vorzugsweise zwischen $0,001^*$B und $0,003^*$B. Bei B ≈ 10 GBit/s entspricht dies Frequenzen von 5 MHz, 50 MHz, 10 MHz und 30 MHz. Durch eine erfindungsgemäß eingestellte untere Grenzfrequenz des Empfängereingangs kann ein gewöhnlicher, für den kontinuierlichen Signalempfang vorgesehener Empfänger für den Empfang von Paketen verwendet werden. Dabei stellen die Werte einen Optimalbereich von Datensicherheit und Datendurchsatz dar.

In den Rahmen der vorliegenden Erfindung fällt weiterhin ein Sender zum Übertragen von Datenpaketen nach dem obigen erfindungsgemäßen Verfahren und dessen Varianten, wobei Mittel zum Durchführen der Schritte (a) und (b) vorgesehen sind. Dadurch können erfindungsgemäße Datenpakete auf einer Signalleitung erzeugt werden.

Weiterhin gehört zur Erfindung ein Empfänger zum Übertragen von Datenpaketen nach dem obigen erfindungsgemäßen Verfahren und dessen Varianten, wobei Mittel zum Durchführen der Schritte (c), (d) und (e) vorgesehen sind. Dadurch können erfindungsgemäße Datenpakete von der Signalleitung ausgelesen werden.

Eine Ausführungsform dieses Empfängers sieht vor, dass ein Koppelkondensator als Hochpass zum Anheben der unteren Grenzfrequenz des Empfängereingangs vorgesehen ist. Dadurch werden die Ausschwingzeiten des Empfängers verkürzt und die Bereitschaft zur Registrierung eines neuen Datenpakets wird nach dem Ende eines vorherigen Datenpakets schnell wiederhergestellt.

Weiterhin zur Erfindung gehörig ist ein Verfahren zur synchronen Übertragung von Datenpaketen in Telekommunikationsnetzwerken, wobei die zu übertragende Datennutzlast in eine Rahmenstruktur gemäß dem Standard G. 709 eingebunden ist, gekennzeichnet dadurch,

(i) dass in den ODUk Overhead eine Verbindungskennung in codierter Form eingefügt wird, die das jeweilige Datenpaket einer bestimmten Netzwerkverbindung zuordnet,
(ii) und dass innerhalb einer Vermittlungsstelle der FEC-Teil der Rahmenstruktur des Datenpakets so modifiziert wird, dass zwischen dem Ende des vorliegenden Datenpakets und dem Anfang des zeitlich unmittelbar folgenden Datenpakets eine Schutzzeit $t_{gb} > 20$ ns liegt und dass ein internes Steuersignal zur Synchronisation von nachfolgenden Empfangseinheiten innerhalb der Vermittlungsstelle auf das Datenpaket generiert wird.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Zeichnung

Die Erfindung ist in der Zeichnung dargestellt und wird anhand von Ausführungsbeispielen näher erläutert. Es zeigt:

Fig. 1a:    Die Rahmenstruktur eines Datenpakets nach dem Standard G. 709;

Fig. 1b:    Die Sendesequenz eines Datenpakets nach dem Standard G.709;

Fig. 2:    Den schematischen Aufbau einer erfindungskonformen Verbindungsstelle zum Übertragen von Daten nach dem erfindungsgemäß modifizierten Standard G.709;

Fig. 3:    Das interne Datenformat des erfindungsgemäß modifizierten Standards G.709.

Detailbeschreibung

Die erfindungsgemäße asynchrone Übertragung von Datenpaketen (Paketübertragung) bewirkt einen Verlust an Kanalkapazität durch die Zeiten $t_{gb}$ (guard band) und $t_{Sy}$ (Synchronisationssequenz). (Das Synchronisationswort wird bei dieser Abschätzung ignoriert, da es vernachlässigbar kurz ist verglichen mit $t_{gb}$ und $t_{gy}$). Die Kanalauslastung liegt damit bei

$$E = t_{pay} / (t_{gb} + t_{sy} + t_{pay}) \tag{1}$$

($t_{pay}$ - Zeitdauer der Nettodatennutzlast, payload)

Eine statistisch unabhängige und gleichverteilte Bitfolge (vergleiche Scrambling) hat einen untere Grenzfrequenz $f_u$ von 0 Hz. Das ist unpraktikabel für technische Systeme. Die untere Grenzfrequenz kann auf 1/300 der Bitrate angehoben werden, sofern man einen Verlust an Signal zu Rausch Abstand von 3 dB akzeptiert, wie durch Simulationsrechnungen festgestellt wurde.

$$f_u \leq (1/300) \cdot 1/T \tag{2}$$

(T - Länge eines Bits, Bitrate B = 1/T, bei B = 10 GBit/s gilt T = 100 ps)

Das Einschwingen am Paketanfang muß innerhalb $t_{sy}$ erfolgen. Die minimale Einschwingzeit des einfachen Hochpasses am Empfängereingang ist etwa gleich der Zeitkonstante tau, die sich aus der unteren Grenzfrequenz ergibt.

$$t_{sy} \geq tau \cong 1/(2\pi f_u) \tag{3}$$

bzw. mit (2) folgt

$$t_{sy} \geq 53\,T \tag{4}$$

Also muss die Synchronisationsfolge mindestens 53 Bit lang sein; in der Praxis wird $t_{sy}$ auf 100 Bit (bzw. 10 ns) erweitert.

Bei der Optischen Paketübertragung muß mit Pegelsprüngen (Intensitätssprüngen) zwischen den Paketen gerechnet werden, da die Pakete aus unterschiedlichen Quellen stammen. Nach einem großen, d.h. leistungsstarken Paket mit Leistung $P_{max}$ braucht der Empfänger die Zeitdauer $t_{gb}$, um auf einen kleinen Pegel eines eventuell kleinsten Paketes mit Leistung $P_{min}$ auszuschwingen.

$$P_{min}/P_{max} \cong \exp(-t_{gb}/tau) \tag{5}$$

Daraus und unter Berücksichtigung von (3) ergibt sich

$$t_{gb} \cong 53\,T\,\ln(P_{max}/P_{min}) \tag{6}$$

Das Leistungsverhältnis in dB: (10 mal dekadischer Logarithmus)

$$R = 10\,\lg(P_{max}/P_{min}) \tag{7}$$
$$R = 10\,\ln(P_{max}/P_{min})\,/\,\ln 10$$

Aus (6) und (7) folgt:

$$t_{gb} \cong 2{,}3\,T * R \tag{8}$$

Die Formel besagt:

- Bei gleichbleibender Paketleistung (R=0) wird kein Guardband benötigt ($t_{gb} = 0$).
- Bei einer angenommenen Leistungsschwankung $R \leq 7$ dB ergibt sich

$$t_{gb} \geq 87\,T \tag{9}$$

Da die Schätzung $R \leq 7$ dB recht willkürlich ist, wird eine Reserve festgelegt, z.B. $t_{gb} \geq 100\,T$, oder aber besser eine deutlichere Reserve mit $t_{gb} \geq 200\,T$, bzw. $t_{gb} \geq 20$ ns.

Um mit den errechneten Grenzwerten $t_{gb}$ und $t_{sy}$ eine geforderte Mindestkanalauslastung E zu erreichen, folgt aus (1)

$$E = t_{pay} / (12{,}3\ T\ R + 53\ T + t_{pay}) \qquad\qquad (10)$$

wobei die Zeitdauer der Payload $t_{pay}$ sich aus der Anzahl der Nutzdatenbits N mal Bitdauer T ergibt: $t_{pay} = N * T$. In (10) eingesetzt und nach N umgestellt ergibt sich:

$$N \geq (12{,}3\ R + 53)\ E / (1\text{-}E) \qquad\qquad (11)$$

Bei einer geforderten Auslastung von mindestens 95% (E=0,95) ergibt sich N ≥2700 bit. Die Nutzdaten pro Paket müssen also länger als 2700 Bit sein, sonst ist 95%ige Auslastung nicht zu erreichen. Unter Berücksichtigung der technischen Aufschläge auf $t_{gb}$, und $t_{sy}$ auf 200 T bzw. 100 T (siehe oben) ergibt sich eine Mindestlänge N ≥ 5700 bit.

Bei dem erfindungsgemäßen Verfahren wird davon ausgegangen, dass die Daten ursprünglich als NRZ-Signale vorlagen.

Im folgenden soll nun das erfindungsgemäße Verfahren zur synchronen Übertragung von Datenpaketen in Telekommunikationsnetzwerken erläutert werden, wobei die zu übertragende Datennutzlast in eine Rahmenstruktur gemäß dem Standard G.709 eingebunden ist.

In WDM-Systemen (WDM: Wellenlängen-Multiplex-Technik) ist vorgesehen, Schaltvorgänge in Netzwerkknoten auf Grundlage der WDM-Kanäle durchzuführen. Dies hat jedoch den Nachteil, dass die Granularität dieser Kanäle von der verwendeten Bitrate abhängt, die bis zu 40 GBit/s betragen kann. Somit ist es schwierig, engmaschige Datentransportnetzwerke aufzubauen, da einige Verbindungen extrem gering ausgelastet werden.

Eine Lösung im Stand der Technik ist das "Burst Switching", vergleiche Nishizawa et al., aaO, für das jedoch ein völlig neues Protokoll erstellt werden muss, was mit zahlreichen Formatänderungen verbunden ist.

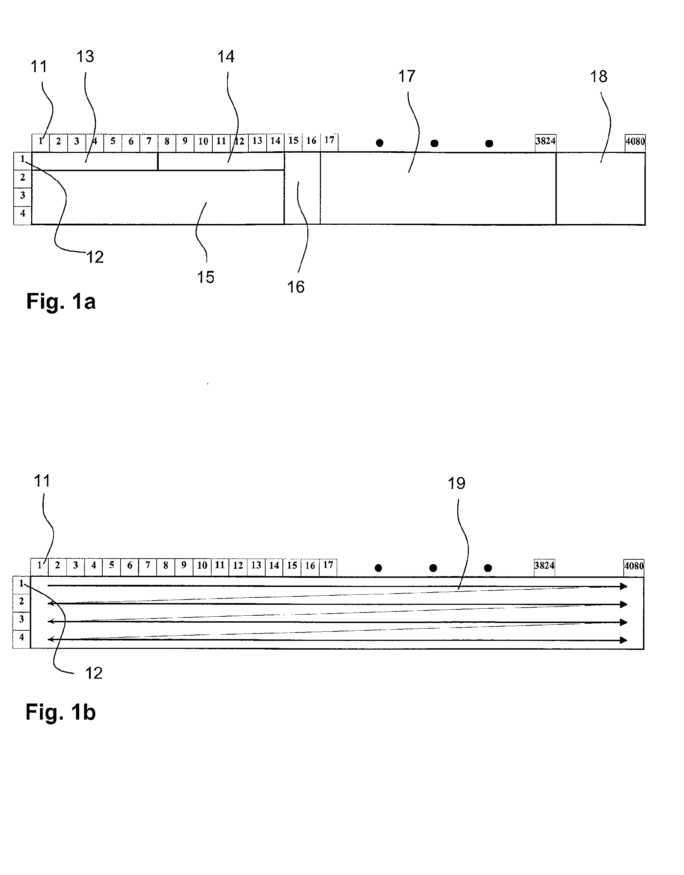

Die erfindungsgemäße, bessere Lösung dieses Problems stellt die Einführung von "vitruellen Wellenlängen" im Standard G.709 dar (zum Standard G.709 siehe Fig. 1 a, 1b unten, sowie ITU-T G.709, 02/2001). Bits, die gegenwärtig als Reserve oder als experimentell in der Daten-Rahmenstruktur G.709 definiert wurden, können zur Unterscheidung von verschiedenen virtuellen Wellenlängen verwendet werden. Die Transportfunktionen haben dann diese virtuellen Wellenlängen zu beachten, beispielsweise werden dann die Monitorfunktionen für jede virtuelle Wellenlänge einzeln durchgeführt. Die virtuellen Wellenlängen können sowohl von konstanter als auch variabler Bandbreite sein.

Durch die erfindungsgemäße Definition bzw. Ausgestaltung der Transportsignale wird es ermöglicht, eine Umschaltfunktion einem optischen Verbindungselement (= ein Netzwerkknoten) auf einfache Weise hinzuzufügen, was ein Schalten auf Grundlage einer virtuellen Wellenlänge erlaubt.

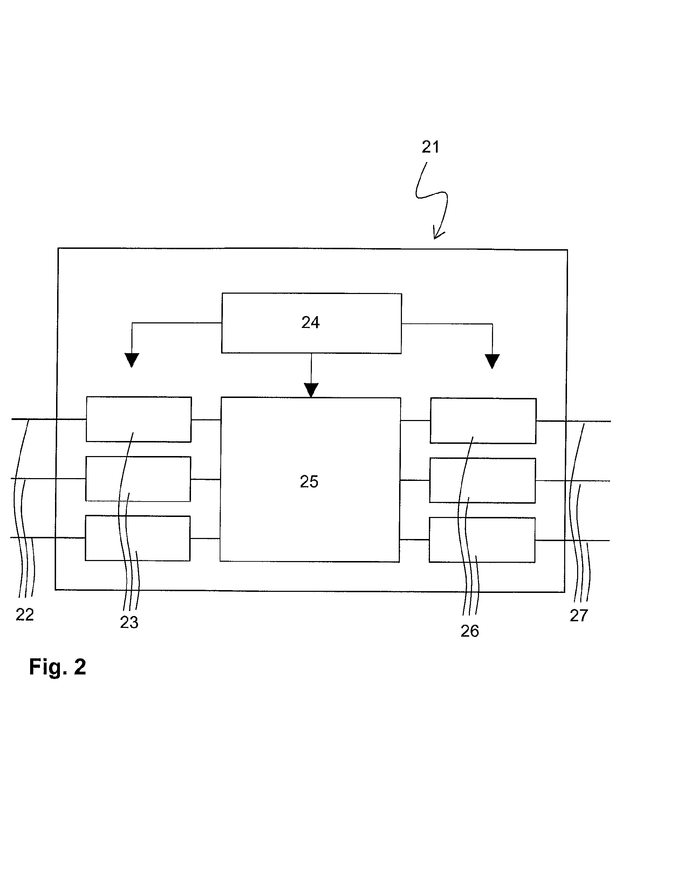

Eine erfindungsgemäße Schaltvorrichtung ist in Figur 2 dargestellt (siehe unten). Die Leitungskarten (line cards) erfüllen senderseitig die folgenden Funktionen:

- FEC-Kontrollberechnungen, falls verfügbar (FEC: forward error correction, Vorwärts-Fehlerkorrektur);
- Anpassung des externen Datenformats (gemäß Standard G.709, "äußere Rahmenstruktur") an das interne Datenformat (erfindungsgemäß modifizierter Standard G.709, "interne Rahmenstruktur"), im Detail:

    - Verwerfen des FEC-Feldes. Dieses wird überflüssig, da innerhalb des Schalters keine Übertragungsfehler möglich sind.
    - Hinzufügen eines "burst overhead" und einer Schutzzeit (guard band) für sicheres Schalten und Empfangen der Datensignale.
    - Der burst overhead enthält zumindest eine Synchronisationssequenz, typisch eine Folge von 010101...-Bits.
    - Der Standard G.709, und damit auch die interne Rahmenstruktur, kann als ganzes geschaltet werden oder auch in 4 Teilabschnitten, da das FEC-Feld auch in 4 Teilabschnitten geschaltet wird, von denen jeder 256 Bytes lang ist. Diese zweite Möglichkeit bietet erhöhte Flexibilität. Neben der Phasen-Synchronisationssequenz (bit synchronisation sequence) muss allerdings in diesem Fall auch eine Bitpositions-Synchronisations-Sequenz (slot synchronisation sequence) dem Datensignal hinzugefügt werden, da die entsprechende Synchronisationssequenz der G.709-Rahmenstruktur (frame alignment overhead) nicht zur Verfügung steht: Diese ist nur in der ersten Datenreihe verfügbar.

- Das Auslesen einer Tabelle, um festzustellen, zu welchem Ausgang die virtuelle Wellenlänge geschaltet werden soll und ob die virtuelle Wellenlänge geändert werden muss;
- Senden eines Anforderungssignals an eine Planstelle (scheduler), die den Zustand der Schaltmatrix kontrolliert. Die Schaltmatrix leitet die Signale von einem ihrer Eingänge an einen ihrer Ausgänge weiter;
- Speicherung der internen Rahmenstruktur, d.h. des Datenpakets, bis die Planstelle die interne Rahmenstruktur freigibt.

Empfängerseitig erfüllen die Leitungskarten folgende Funktionen:

- Empfang der internen Rahmenstrukturen (Datenpakete) im Burst-Betrieb;
- Entfernen des internen Daten-Overhead;
- Neuberechnung des FEC-Feldes falls nötig und
- Senden des Datensignals (d.h. der wiederhergestellten äußeren Rahmenstruktur) an die Außenverbindung, also letztlich an den nächsten Netzwerkknoten oder den endgültigen Empfänger).

Die Schaltmatrix hat die Aufgabe, die internen Datenstrukturen genau während der Schutzzeiten zu schalten, um jede Art von Datenverstümmelung zu vermeiden. Die interne Verwendung des FEC-Feldes als Overhead hat den Vorteil, dass keine Erhöhung der Übertragungsgeschwindigkeit (speed up) notwendig wird, d.h. keine verschiedenen Zeitsysteme beachtet werden müssen.

In der Verbindungsstelle kann die interne Rahmenstruktur im Burst-Mode geschaltet werden, d.h. eine genaue Phasensynchronisation aller Leitungskarten ist nicht nötig.

Das erfindungsgemäße synchrone Verfahren der Signalübertragung gestattet die Nutzung von Burst-Mode-spezifischen Vorteilen, ohne dass das gesamte Netzwerk nach dem Burst-Modus betrieben werden muss, sondern nur ein Teil des Netzwerkknotens. Vorteilhaft ist außerdem die enge Verwandschaft des internen Datenformats zum Standardformat G.709.

**Figur 1a** zeigt eine Rahmenstruktur gemäß dem originalen G.709-Standard. In der Darstellung sind die numerierten Spalten 11 und Reihen 12 von Bytes des G.709-Datenpakets dargestellt. Die erste Reihe beginnt mit einer Synchronisationssequenz der Rahmenstruktur 13 (frame alignment overhead), gefolgt vom optischen Transporteinheiten-Overhead 14 (Optical transport unit overhead, OTUk Overhead). In den Reihen 2 bis 4 werden diese beiden Bereiche 13, 14 ersetzt durch den optischen Dateneinheiten-Overhead 15 (optical data unit overhead, ODUk Overhead). In allen vier Reihen schließt sich der optische Nutzlasteinheiten-Overhead 16 (optical payload unit overhead, OPUk overhead) an, gefolgt von der Datennutzlast 17 (OPUk payload). Den Abschluss aller Reihen bildet ein Abschnitt der Vorwärts-Fehlerkorrektur 18 (forward error correction, FEC).

Die Übertragungsabfolge von Daten einer solchen Rahmenstruktur ist in **Figur 1b** schematisch dargestellt. Die Übertragung erfolgt reihenweise, beginnend mit der ersten Reihe in der ersten Spalte, und dann gemäß der Reihenfolge der Spalteneinträge. Nach Abschluss der ersten Reihe wird mit Übertragung der zweiten Reihe, beginnend mit deren erster Spalte, in Pfeilrichtung 19 fortgesetzt, bis die gesamte Rahmnenstruktur abgearbeitet ist.

**Figur 2** zeigt einen Netzwerkkonten 21, der mit dem erfindungsgemäßen Verfahren zur synchronen Datenübertragung arbeitet. Mehrere Eingänge 22 führen zum senderseitigen Set von Leitungskarten 23. Bei Ankunft eines Datenpakets gemäß Standard G.709 an einer der Leitungskarten 23 gibt die betroffene Leitungskarte eine Meldung an die Planstelle 24 (auch scheduler genannt) und verarbeitet die externe Rahmenstruktur in die erfindungsgemäße interne Rahmenstruktur. Unter Vermeidung von Kollisionen und bei Einhaltung der Mindestschutzzeit von 20 ns gibt der Scheduler die anstehende nunmehr interne Rahmenstruktur an die Matrix frei, die vom Scheduler entsprechend dem Ziel des Datenpakets eingestellt wurde, so dass die interne Rahmenstruktur an die entsprechende Leitungskarte des empfängerseitigen Sets von Leitungskarten 26 weitergegeben wird. Dort erfolgt die Wiederherstellung des ursprünglichen Datenformats und die Weitergabe an die entsprechende Ausgangsleitung der Ausgänge 27 des Netzwerknotens 21.

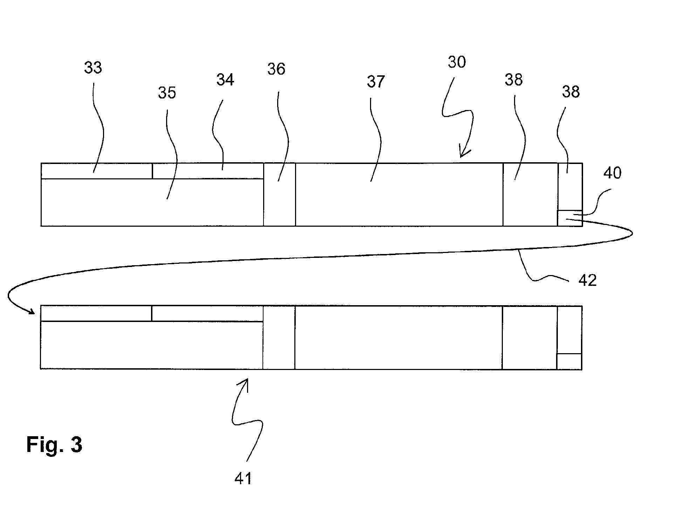

In **Figur 3** ist die interne Rahmenstruktur 30 und 41, wie sie von der senderseitigen Leitungskarte aus den eingehenden Datenpaketen des Formats G.709 erzeugt wird, dargestellt. Frame alignment overhead 33, OTUk Overhead 34, ODUk Overhead 35, OPUk Overhead 36 und ODUk Payload 37 sind wie im Standard G.709, vgl. Fig. 1a, angeordnet. An die Stelle des FEC 18 treten eine Schutzzeit (guard band) 38 und ein interner Overhead 39 (internal overhead), wobei sich die Schutzzeit 38 durch sämtliche Reihen erstreckt, der interne Overhead 39 aber nur über die ersten drei Reihen. Der interne Overhead 39, der auch als "burst overhead" bezeichnet wird, zeigt also jeweils einen nachfolgenden Datenabschnitt vom Typ einer zweiten bis vierten Reihe an und kann zur Synchronisation eingesetzt werden, während ein Fehlen des internen Overhead 39 den Beginn einer neuen internen Rahmenstruktur einhergeht. Der Abschlussabschnitt 40 in Figur 3 der oberen internen Rahmenstruktur 30 wird dann schon der unteren internen Rahmenstruktur 41 zugeordnet, bei dem die Übertragung gemäß Pfeilrichtung 42 weitergeht. Die untere interne Rahmenstruktur 41 gleicht in ihrem Aufbau der oberen internen Rahmenstruktur 30.

**Patentansprüche**

**1.** Verfahren zum asynchronen Übertragen von Datenpaketen in Telekommunikationsnetzen mit einer Bitrate B, **ge-**

**kennzeichnet durch** folgende Schritte:

(a) Bearbeiten der zu übertragenden Daten in der Weise, dass die Wahrscheinlichkeit des Auftreffens eines 0- oder 1-Zustandes im Datenstrom an jeder Bit-Position ungefähr gleich groß und unabhängig von anderen Bitpositionen ist (=Scrambling);
(b) Abwarten einer Schutzzeit $t_{gb}$, Senden einer Synchronisationssequenz während einer Zeit $t_{sy}$, Senden eines Synchronisationswortes während der Zeit $t_{co}$ und Senden der Datennutzlast;
(c) Erkennen einer Synchronisationssequenz und Synchronisierung darauf in einem Empfänger;
(d) Erkennen des Anfangs des Datenpakets **durch** Erkennen des Synchronisationswortes im Empfänger;
(e) Empfangen der Datennutzlast im Empfänger.

2. Verfahren nach Anspruch 1, **dadurch gekennzeichnet, dass** das die Übertragung der Datenpakete durch eine hochbitratige optische Datenübertragung mit B ≥ 9,95328 Gigabit/Sekunde erfolgt.

3. Verfahren nach einem der vorherigen Ansprüche, **dadurch gekennzeichnet, dass** die Übertragung der Datenpakete im Burst-Modus erfolgt.

4. Verfahren nach einem der vorherigen Ansprüche, **dadurch gekennzeichnet, dass** zur Bearbeitung der Daten in Schritt (a) ein Kodierungsverfahren verwendet wird, bei dem das Leistungsspektrum der kodierten Daten keine Intensität bei Frequenzen unterhalb von $0{,}01^*B$ aufweist, insbesondere keine Intensität unterhalb von $0{,}003^*B$.

5. Verfahren nach einem der vorherigen Ansprüche, **dadurch gekennzeichnet, dass** die Datenpakete von mehreren Sendern auf ein Netzelement gesendet werden, welches die Datenpakete auf eine gemeinsame Ausgangsleitung zu einem ausgewählten Empfänger leitet.

6. Verfahren nach Anspruch 5, **dadurch gekennzeichnet, dass** die Weiterleitung der Datenpakete im Netzelement im Zeit-Multiplex erfolgt.

7. Verfahren nach Anspruch 5 oder 6, **dadurch gekennzeichnet, dass** das Netzelement eine zeitliche Trennung eines Endes eines ersten Datenpakets von einem Anfang eines zweiten weitergeleiteten Datenpakets von mindestens $t_{gb}$ bewirkt.

8. Verfahren nach einem der vorherigen Ansprüche, **dadurch gekennzeichnet, dass** die Schutzzeit $tgb \geq \frac{100}{B}$ gewählt wird.

9. Verfahren nach einem der vorherigen Ansprüche, **dadurch gekennzeichnet, dass** die untere Grenzfrequenz des Empfängereingangs zwischen $0{,}0005^*B$ und $0{,}005^*B$, vorzugsweise zwischen $0{,}001^*B$ und $0{,}003^*B$ beträgt.

10. Verfahren zur synchronen Übertragung von Datenpaketen in Telekommunikationsnetzwerken, wobei die zu übertragende Datennutzlast in eine Rahmenstruktur gemäß dem Standard G.709 eingebunden ist, **gekennzeichnet dadurch**,

(i) dass in den ODUk Overhead eine Verbindungskennung in codierter Form eingefügt wird, die das jeweilige Datenpaket einer bestimmten Netzwerkverbindung zuordnet,
(ii) und dass innerhalb einer Vermittlungsstelle der FEC-Teil der Rahmenstruktur des Datenpakets so modifiziert wird, dass zwischen dem Ende des vorliegenden Datenpakets und dem Anfang des zeitlich unmittelbar folgenden Datenpakets eine Schutzzeit $t_{gb}$ > 20 ns liegt und dass ein internes Steuersignal zur Synchronisation von nachfolgenden Empfangseinheiten innerhalb der Vermittlungsstelle auf das Datenpaket generiert wird.

11. Sender zum Übertragen von Datenpaketen nach einem der Ansprüche 1 bis 9, **dadurch gekennzeichnet, dass** Mittel zum Durchführen der Schritte (a) und (b) vorgesehen sind.

12. Empfänger zum Übertragen von Datenpaketen nach einem der Ansprüche 1 bis 9, **dadurch gekennzeichnet, dass** Mittel zum Durchführen der Schritte (c), (d) und (e) vorgesehen sind.

13. Empfänger nach Anspruch 12, **dadurch gekennzeichnet, dass** ein Koppelkondensator als Hochpass zum Anheben der unteren Grenzfrequenz des Empfängereingangs vorgesehen ist.

**Fig. 1a**

**Fig. 1b**

**Fig. 2**

Fig. 3

**Europäisches Patentamt**

# EUROPÄISCHER RECHERCHENBERICHT

Nummer der Anmeldung

EP 02 36 0160

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | OSHIMA K ET AL: "FIBER-OPTIC LOCAL AREA PASSIVE NETWORK USING BURST TDMA SCHEME" JOURNAL OF LIGHTWAVE TECHNOLOGY, IEEE. NEW YORK, US, Bd. LT-3, Nr. 3, Juni 1985 (1985-06), Seiten 502-510, XP000810261 ISSN: 0733-8724 | 1 | H04L7/04 H04J3/06 H04B10/158 |
| Y | * Seite 504, rechte Spalte, Zeile 5 - Zeile 17 * * Seite 506, rechte Spalte, Zeile 1 - Zeile 5 * * Abbildungen 4,7 * ----- | 2-9, 11-13 | |
| Y | TAKAHASHI Y ET AL: "NEW RETIMING AND SYNCHRONISATION SCHEME FOR OPTICAL ATM SWITCHING SYSTEMS" ELECTRONICS LETTERS, IEE STEVENAGE, GB, Bd. 26, Nr. 2, 18. Januar 1990 (1990-01-18), Seiten 99-100, XP000104997 ISSN: 0013-5194 * das ganze Dokument * ----- | 2-9, 11-13 | |
| A | EP 0 580 567 A (ALCATEL AUSTRIA AG) 26. Januar 1994 (1994-01-26) * Zusammenfassung; Abbildungen 1,2 * * Spalte 1, Zeile 32 - Zeile 51 * * Spalte 2, Zeile 21 - Zeile 35 * ----- | 4-9, 11-13 | |

**RECHERCHIERTE SACHGEBIETE (Int.Cl.7)**

H03F
H04B
H04L
H04J

-/--

Der vorliegende Recherchenbericht wurde für alle Patentansprüche erstellt

| Recherchenort | Abschlußdatum der Recherche | Prüfer |
|---|---|---|
| Den Haag | 23. April 2003 | Wolters, R. |

**Europäisches Patentamt**

# EUROPÄISCHER RECHERCHENBERICHT

Nummer der Anmeldung

EP 02 36 0160

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,A | NISHIZAWA H., ET AL.: "Packet-by-packet power-fluctuation and packet-arrival timing-jitter tolerance of a 10-GBit/s burst-mode optical packet receiver" ECOC 2000, 26TH EUROPEAN CONFERENCE ON OPTICAL COMMUNICATION, Bd. 4, 3. September 2000 (2000-09-03), - 7. September 2000 (2000-09-07) Seiten 75-77, XP008015879 Münich, Germany * Seite 75, linke Spalte, Absatz 1 - rechte Spalte, Absatz 4 * ----- | 1-9, 11-13 | |
| D,A | "Interface for the optical transport network (OTN)" ITU-T RECOMMENDATION G.709, XX, XX, Februar 2001 (2001-02), Seiten 1-80, XP002195641 * Absätze [3.16], [07.2], [11.1], [11.2]; Abbildungen 6.1,11.1,15.23,II.2-II.7; Tabelle 15.7 * ----- | 1-9, 11-13 | |
| A | NISHIZAWA H ET AL: "10-GB/S OPTICAL DPSK PACKET RECEIVER PROOF AGAINST LARGE POWER FLUCTUATIONS" IEEE PHOTONICS TECHNOLOGY LETTERS, IEEE INC. NEW YORK, US, Bd. 11, Nr. 6, Juni 1999 (1999-06), Seiten 733-735, XP000835441 ISSN: 1041-1135 * das ganze Dokument * ----- | 1-9, 11-13 | |
| A | US 4 355 388 A (DEAL JR JOSEPH H) 19. Oktober 1982 (1982-10-19) * Spalte 5, Zeile 17 - Zeile 31 * * Spalte 10, Zeile 29 - Zeile 40 * * Abbildung 2 * ----- -/-- | 1-13 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| Den Haag | 23. April 2003 | Wolters, R. |

Europäisches
Patentamt

**EUROPÄISCHER RECHERCHENBERICHT**

Nummer der Anmeldung

EP 02 36 0160

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | GB 2 249 003 A (STC PLC)<br>22. April 1992 (1992-04-22)<br>* Zusammenfassung; Abbildung 1 *<br>* Seite 1, Absätze 2,4 *<br>* Seite 3, Absatz 2 *<br>----- | 1,6-8,<br>11,12 | |
| A | US 5 323 463 A (SPEISER BENJAMIN T)<br>21. Juni 1994 (1994-06-21)<br>* Zusammenfassung *<br>* Spalte 2, Zeile 20 - Zeile 51 *<br>* Spalte 4, Zeile 21 - Zeile 43 *<br>----- | 1,4,9,<br>11,12 | |
| A | EP 0 632 579 A (ALCATEL NV)<br>4. Januar 1995 (1995-01-04)<br>* Zusammenfassung; Abbildung 1 *<br>* Spalte 2, Zeile 11 - Zeile 39 *<br>----- | 1-9,<br>11-13 | |

RECHERCHIERTE
SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| Den Haag | 23. April 2003 | Wolters, R. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes
    Dokument

EPO FORM 1503 03.82 (P04C03)

**Europäisches**

**Patentamt**

Nummer der Anmeldung

EP 02 36 0160

## GEBÜHRENPFLICHTIGE PATENTANSPRÜCHE

Die vorliegende europäische Patentanmeldung enthielt bei ihrer Einreichung mehr als zehn Patentansprüche.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

1-9,11-13

**Europäisches Patentamt**

**MANGELNDE EINHEITLICHKEIT DER ERFINDUNG ERGÄNZUNGSBLATT B**

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-9,11-13

   Ein Verfahren zum asynchronen Uebertragen van Datenpaketen in Telekommunikationsnetzen, gekenzeichnet durch eine Schutzzeit zwischen nachfolgende Datenpaketen, und durch eine Synchronisationssequenz und Synchronisationswortes am Amfang jedes Datenpaket

   ---

2. Anspruch: 10

   Ein Verfahren zum synchronen Uebertragen von Datenpaketen in Telekommunikationsnetzen, wobei Datenpaketen welche gemäss dem Standard G.709 eingebunden sind, so modifiziert werden dass der ODUk overhead eine Verbindungskennung enthaelt die das Datenpaket eine bestimmten Netzwerkverbindung zuordnet, sowieso der FEC-Teil jedes Datenpaket so modifiziert wirt dass zwischen nachfolgenden Datenpaketen eine Schutzzeit liegt.

   ---

## ANHANG ZUM EUROPÄISCHEN RECHERCHENBERICHT
## ÜBER DIE EUROPÄISCHE PATENTANMELDUNG NR.

EP 02 36 0160

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-04-2003

| Im Recherchenbericht angeführtes Patentdokument | | Datum der Veröffentlichung | Mitglied(er) der Patentfamilie | | Datum der Veröffentlichung |
|---|---|---|---|---|---|
| EP 0580567 | A | 26-01-1994 | AT | 398661 B | 25-01-1995 |
| | | | AT | 149192 A | 15-05-1994 |
| | | | EP | 0580567 A1 | 26-01-1994 |
| US 4355388 | A | 19-10-1982 | CA | 1157590 A1 | 22-11-1983 |
| | | | EP | 0026603 A1 | 08-04-1981 |
| | | | FR | 2466916 A1 | 10-04-1981 |
| | | | JP | 56100534 A | 12-08-1981 |
| GB 2249003 | A | 22-04-1992 | KEINE | | |
| US 5323463 | A | 21-06-1994 | US | 5216714 A | 01-06-1993 |
| EP 0632579 | A | 04-01-1995 | ES | 2076077 A2 | 16-10-1995 |
| | | | DE | 69416621 D1 | 01-04-1999 |
| | | | DE | 69416621 T2 | 29-07-1999 |
| | | | EP | 0632579 A2 | 04-01-1995 |

EPO FORM P0461

Für nähere Einzelheiten zu diesem Anhang : siehe Amtsblatt des Europäischen Patentamts, Nr.12/82